# EUROPÄISCHE PATENTSCHRIFT

(11) **EP 2 285 537 B1**
(45) Veröffentlichungstag und Bekanntmachung des Hinweises auf die Patenterteilung: **06.01.2016**
(21) Anmeldenummer: 09761368.1
(22) Anmeldetag: 14.05.2009
(51) Int. Cl.: B25J 9/16, G05B 19/4093

(54) **VORRICHTUNG UND VERFAHREN ZUR RECHNERGESTÜTZTEN GENERIERUNG EINER MANIPULATORBAHN**
DEVICE AND METHOD FOR THE COMPUTER-ASSISTED GENERATION OF A MANIPULATOR TRACK
DISPOSITIF ET PROCÉDÉ DE GÉNÉRATION ASSISTÉE PAR ORDINATEUR D' UNE BANDE DE MANIPULATEUR

(30) Priorität: 09.06.2008 DE 102008027475
(43) Veröffentlichungstag der Anmeldung: 23.02.2011
(73) Patentinhaber: KUKA Roboter GmbH, 86165 Augsburg (DE)
(72) Erfinder: KEIBEL, Andreas, 86161 Augsburg (DE)
(74) Vertreter: Schlotter, Alexander Carolus Paul
(86) Internationale Anmeldenummer: PCT/EP2009/003443
(87) Internationale Veröffentlichungsnummer: WO 2009/149805

(56) Entgegenhaltungen:
- EP-A1- 0 852 346
- EP-A2- 1 217 482
- EP-A2- 1 302 828
- WO-A1-00/25185
- WO-A1-2005/014241
- US-A- 5 645 884
- US-A1- 2003 171 842
- US-A1- 2004 213 915
- US-A1- 2006 025 890

## Beschreibung

Die vorliegende Erfindung betrifft eine Vorrichtung und ein Verfahren zur rechnergestützten Generierung einer Manipulatorbahn und insbesondere zur rechnergestützten Generierung eines Manipulatorprozesses.

Ein Manipulatorprozess umfasst allgemein eine Bahn eines oder mehrerer Manipulatoren, insbesondere Robotern und Kombinationen aus Robotern und zusätzlichen Achsen wie beispielsweise Linearachsen, Dreh- oder Dreh-Kipp-Tischen, sowie eine Aktionsfolge von einem oder mehreren Werkzeugen, insbesondere Manipulatorwerkzeugen wie einem Greifer, einer Schweißzange oder dergleichen. Beispielsweise kann ein Manipulatorprozess zur automatisierten Montage einer Dichtung an einer Kraftfahrzeugtür unter anderem die Anlieferung der Tür in eine Montagezelle durch ein erstes Werkzeug in Form eines Förderbandes oder einen ersten Industrieroboter, das Positionieren auf einer externen Achse eines Drehtisches, das Auftragen eines Klebstoffes längs eines Randes der Tür durch einen zweiten Industrieroboter mit einem zweiten Werkzeug in Form einer Klebepistole, sowie das Einsetzen der Tür durch einen dritten Industrieroboter umfassen, dessen Greifer ein drittes Werkzeug darstellt. Hierzu bewegt sich der zweite Industrieroboter derart längs einer Manipulatorbahn, dass die von ihm geführte Klebepistole auf einer Werkzeugbahn Kanten der Tür abfährt und abschnittsweise Klebstoff aufträgt, i.e. die Klebepistole auf der Werkzeugbahn in einer vorgegebenen Aktionsfolge aktiviert bzw. deaktiviert wird.

Vorliegend wird eine vorgegebene Abfolge von einer oder mehreren Positionen allgemein als Bahn bezeichnet, wobei eine Position die Lage und/oder Orientierung definiert. Eine Werkzeugbahn umfasst daher eine oder mehrere Lagen und/oder Orientierungen des Werkzeugs, beispielsweise die Lage und Orientierung eines Greifers, einer Austrittsöffnung einer Klebepistole oder dergleichen. In entsprechender Weise umfasst eine Manipulatorbahn eine oder mehrere Posen des Manipulators, beschrieben beispielsweise im Koordinaten- oder Gelenkraum durch seine Gelenkstellungen, oder im kartesischen Arbeitsraum, beschrieben beispielsweise durch Lage und Orientierung seines TCPs ("Tool Center Points"), die sich eindeutig aus den Gelenkstellungen ergibt und, bei redundanten Manipulatoren bzw. singulären Posen gegebenenfalls unter Beachtung zusätzlicher Randbedingungen, durch Rückwärtstransformation der Kinematik bzw. Lösen der Rückwärtskinematik auf die Gelenkstellungen abbildbar ist.

In wenigstens einer Position einer Werkzeugbahn können ein oder mehrere Prozesswerte des Werkzeuges geändert werden, um Aktionen zu bewirken bzw. Aktionsfolgen auszuführen. Beispielsweise kann bei einer Klebepistole die Menge des ausgegebenen Klebstoffes durch Variation des Drucks, bei einer Schweißzange Stromstärke und/oder zugeführtes Schweißdrahtvolumen, bei einem Greifer die Öffnungswinkel bzw. -zeiten der Greiferzangen und dergleichen als Prozesswert geändert werden.

Die Prozesswerte eines manipulatorgeführten Werkzeuges entlang einer Bahn eines Manipulators beschreiben somit zusammen mit dieser Bahn des Manipulators einen Manipulatorprozess, in dem ein Manipulator ein Werkzeug in wenigstens eine Position bringt und dort wenigstens ein Prozesswert des Werkzeuges geändert wird. Arbeiten, beispielsweise in einer Fertigungs- oder Montagezelle, mehrere Manipulatoren bzw. Werkzeuge zusammen, kann die Kombination der verschiedenen Manipulatorbahnen und Prozesswertverläufe ebenfalls einen Manipulatorprozess bilden.

Bisher werden solche Manipulatorprozesse in der Regel vor Ort, beispielsweise in der Montagezelle, durch sogenanntes Teachen schrittweise in eine Manipulatorsteuerung eingegeben, indem ein Bediener mit dem Manipulator manuell Posen auf der gewünschten Manipulatorbahn anfährt, die anschließend durch einen Bahngenerator der Manipulatorsteuerung zu einer Manipulatorbahn verbunden werden. Probleme, beispielsweise singuläre oder nicht erreichbare Posen, Kollisionen und dergleichen werden dabei erst spät erkannt, was zeitraubendes Neu-Teachen erfordert. Eine Optimierung des Manipulatorprozesses mittels mathematischer Verfahren ist ebenso wie eine Übertragung auf andere Manipulatoren kaum möglich.

Neben diesem Teachen ist auch eine sogenannte Offline-Programmierung bekannt. Hierbei wird aus einer Abfolge von einzelnen Steuerbefehlen, die der Bediener an einem Rechner oder der Manipulatorsteuerung eingibt, eine Steueranweisung generiert, deren Abarbeitung durch die Manipulatorsteuerung den Manipulator auf der gewünschten Bahn führt. Dieses Verfahren erfordert jedoch aufgrund der komplexen und für verschiedene Manipulatorsteuerungen jeweils unterschiedlichen Steuerbefehle hochqualifizierte Bediener und ist wenig intuitiv, was einer breiten Anwendung in der Praxis entgegensteht. Eine Modifikation des Manipulatorprozesses durch Änderung der abstrakten Steuerbefehle ist aufwändig.

Beiden Ansätzen gemeinsam ist dabei der frühzeitige Focus auf die Manipulatorbahn bei der Planung eines Manipulatorprozesses, so dass insbesondere der eingesetzte Manipulator bereits am Anfang der Manipulatorprozessplanung festgelegt und die Manipulatorbahn bei einem Wechsel des eingesetzten Manipulators somit neu generiert werden muss. Zudem ist die Programmierung von Manipulatorbahnen durch Teachen oder Offline-Programmierung meist nur wenig anschaulich und behindert den breiteren Einsatz von Manipulatoren beispielsweise in Handwerksbetrieben, in denen der Anwender hauptsächlich an der Lösung der Prozessaufgabe, beispielsweise das Auftragen von Klebstoff längs einer Bauteilkante, interessiert ist.

Die US 2006/0025890 A1 beschreibt eine Vorrichtung zur offline Erzeugung eines Programms für einen Prozess, der durch Roboter durchgeführt wird. Dabei werden CAD-Daten genutzt, um die Form des Werkstücks zu beschreiben. Mittels eines visuellen Sensors werden Position und Orientierung des Werkstücks ermittelt.

Die US 2004/0213915 A1 beschreibt ein Verfahren zur Segmentierung der Oberfläche eines Werkstücks in virtuelle Teiloberflächen aus denen die Bahnplanung für ein Lackierwerkzeug abgeleitet wird.

Die US 5,645,884 beschreibt ein Verfahren zum Beschichten eines Werkstücks. Dabei wird auf der Basis eines digitalisierten Modells des Werkstücks eine Trajektorie generiert und außerdem werden Prozessgrößen definiert.

Die WO 00/25185 A1 beschreibt ein Verfahren zur Erzeugung eines Prozess-Plans für einen Roboter. Dabei wird auf Basis von Werkstückinformation eine Prozess-Schablone ausgewählt und durch Festlegen der Parameter dieser Schablone der Prozess definiert.

Aufgabe der vorliegenden Erfindung ist es daher, die Generierung einer Manipulatorbahn zu verbessern.

Diese Aufgabe wird durch ein Verfahren mit den Merkmalen des Anspruchs 1 gelöst. Anspruch 10 stellt eine Vorrichtung, Anspruch 11 bzw. 12 ein Computerprogramm bzw. ein Computerprogrammprodukt zur Durchführung eines Verfahrens nach Anspruch 1 unter Schutz. Die Unteransprüche betreffen vorteilhafte Weiterbildungen.

Die vorliegende Erfindung basiert auf der Idee, sich bei der Generierung einer Manipulatorbahn an der zu lösenden Prozessaufgabe, etwa der Handhabung und/oder Bearbeitung eines Werkstückes, zu orientieren und in Abhängigkeit hiervon die Manipulatorbahn, zu generieren. Während bisher versucht wird, mit einem vorab festgelegten Manipulator eine Prozessaufgabe zu erfüllen, steht erfindungsgemäß nun die Prozessaufgabe im Vordergrund, aus der sich sukzessive eine hierfür optimale Manipulatorbahn und in einer bevorzugten Weiterbildung der komplette Manipulatorprozess generieren lässt, der neben einer oder mehreren Manipulatorbahnen auch Prozesswertverläufe von einem oder mehreren Werkzeugen relativ zu der bzw. den Manipulatorbahnen umfasst.

Diese Vorgehensweise ist zum einen intuitiver, da insbesondere ein im Umgang mit Manipulatoren nicht versierter Bediener primär an der Lösung der Prozessaufgabe interessiert ist, also beispielsweise ein Werkstück in bestimmter Weise bearbeiten will, und erfindungsgemäß bei der Generierung einer hierfür optimalen Manipulatorbahn unterstützt wird. Zum anderen führt die erfindungsgemäße Lösung zu einer effizienteren Manipulatorbahngenerierung, da deduktiv von der gewünschten Wirkung, nämlich der Lösung der Prozessaufgabe, schrittweise die hierzu erforderlichen Ursachen, insbesondere eine Manipulatorbahn ermittelt werden. Ein rechnergestütztes Verfahren ermöglicht die teilautomatisierte Umsetzung dieses Prinzips.

Ein erfindungsgemäßes Verfahren zur rechnergestützten Generierung eines Manipulatorprozesses erzeugt eine abspeicherbare virtuelle Manipulatorbahn oder, vorzugsweise, einen abspeicherbaren virtuellen Manipulatorprozess, bevorzugt in Form eines objektorientierten Prozessdatenmodells, und umfasst hierzu zum einen die Positionierung eines oder mehrerer virtueller Bauteile relativ zu einem Bezugssystem mittels einer Positioniereinrichtung.

Das Bezugssystem kann beispielsweise ein Weltkoordinatensystem, ein Koordinatensystem einer Montagezelle, eines Manipulators oder dergleichen sein. In diesem Koordinatensystem können Positionen, i.e. Lagen und/oder Orientierungen von Punkten, Linien, Flächen, Koordinatensystemen und dergleichen, angegeben werden. Vorzugsweise kann ein Anwender eines rechnergestützten Verfahrens ein geeignetes Bezugssystem aus einem Katalog auswählen. Beispielsweise können verschiedene abgespeicherte Bezugssysteme verschiedene Zellen mit ihren Randbedingungen wie vorhandenen Arbeits- und Schutzräumen, Hindernissen und dergleichen abbilden. Wenn in einer besonders bevorzugten Ausführung die rechnergestützte Generierung objektorientiert erfolgt, kann das Bezugssystem ein Objekt mit entsprechenden Eigenschaften sein.

Relativ zu diesem Bezugssystem werden mittels der Positioniereinrichtung ein oder mehrere virtuelle Bauteile positioniert. Einem virtuellen Bauteil können verschiedene Eigenschaften zugeordnet sein, beispielsweise geometrische Abmessungen, Materialdaten wie Gewicht, Elastizität, Trägheitsmomente und dergleichen. Auch das virtuelle Bauteil kann bevorzugt aus einer Bibliothek ausgewählt werden. Vorzugsweise werden virtuelle Bauteile mit ihren Eigenschaften aus numerischen Daten, etwa Fertigungsbemaßungen, CAD-Daten, FEM-Daten oder dergleichen generiert und in eine solche Bibliothek oder direkt in den virtuellen Manipulatorprozess importiert. In einem objektorientierten Prozessdatenmodell können sie mit dem Bezugssystem verknüpft sein, um ihre Position relativ zu diesem zu definieren. Dabei können virtuelle Bauteile gleichermaßen relativ zum Bezugssystem ruhen, wenn sie etwa einen Montagetisch in einer Montagezelle abbilden, oder sich relativ zum Bezugssystem bewegen, wenn sie etwa ein Werkstück auf einem Transportband abbilden. Sind mehrere virtuelle Bauteile vorhanden, kann ihre Position vorzugsweise relativ zum Bezugssystem oder einem anderen virtuellen Bauteil definiert werden, dessen Position relativ zum Bezugssystem direkt oder indirekt, i.e. über weitere virtuelle Bauteile definiert ist.

Besonders bevorzugt erfolgt die Positionierung der virtuellen Bauteile ebenso wie weitere Verfahrensschritte mittels eines zwei- oder dreidimensionalen Editors (2D-, 3D-Editor), der eine zwei- bzw. dreidimensionale Ansicht des Bezugssystems zeigt, in der ein Bediener mit einem Eingabegerät, etwa einer Tastatur, einer zweidimensionalen Maus, einem Trackball, einer drei- oder mehrdimensionalen Maus (sogenannte "Spacemouse"), einem Joystick, einem Virtual-Reality-Eingabegerät wie einem VR-Handschuh oder dergleichen, Objekte platzieren bzw. editieren kann. Die Auswahl und Positionierung eines virtuellen Bauteils kann dann vorzugsweise mittels einer drag-and-drop-Funktionalität erfolgen.

Zur Bearbeitung eines virtuellen Bauteils wählt der Bediener ein oder mehrere virtuelle Werkzeuge, die erfindungsgemäß durch eine Werkzeugladeeinrichtung bereitgestellt und geladen werden. Auch diese können vorzugsweise aus einer Bibliothek abgespeicherter virtueller Werkzeuge ausgewählt werden, der dem Bediener beispielsweise vom Hersteller der realen Werkzeuge zur Verfügung gestellt oder vom Bediener mittels eines geeigneten Editors generiert werden kann. Auch ein Referenzpunkt eines Manipulators, der sogenannte TCP kann ein virtuelles Werkzeug bilden, um etwa reine Transferbewegungen eines Manipulators zu generieren.

Einem virtuellen Werkzeug, welches in einem objektorientierten Prozessdatenmodell ein Objekt bilden kann, können bestimmte Eigenschaften zugeordnet sein. So können einem virtuellen Werkzeug, neben physikalischen Eigenschaften wie beispielsweise Masse und/oder Massenträgheit, insbesondere mögliche Prozesswerte, beispielsweise das Aktivieren bzw. Deaktivieren einer Schweißzange oder Klebepistole, das Öffnen bzw. Schließen eines Greifers, das Aufbringen eines Drehmomentes auf einen Bohr- oder Fräskopf oder dergleichen zugeordnet sein.

Zusätzlich oder alternativ können einem virtuellen Werkzeug auch bestimmte Geometriedaten, beispielsweise Werkzeugabmessungen zugeordnet sein, etwa die Außenmaße einer Klebepistole oder Schweißzange oder die veränderbare Lage von Greiferzangen.

Zusätzlich oder alternativ können einem virtuellen Werkzeug auch bestimmte Werkzeugbahnbedingungen zugeordnet sein. Beispielsweise wird eine Klebepistole im Allgemeinen auf einer Kante oder in einem Bewegungsmuster auf einer zwei- oder dreidimensionalen Fläche geführt, um dort Klebstoff aufzubringen. Ein Bohrer wird in der Regel auf einer Vorschubgeraden geführt. Somit kann beispielsweise einer virtuellen Klebepistole die Werkzeugbahnbedingung zugeordnet sein, dass eine Werkzeugbahn längs einer Kante oder auf einer Fläche verläuft, während einem virtuellen Bohrer die Werkzeugbahnbedingung zugeordnet sein kann, dass eine Werkzeugbahn durch einen Anfangs- und Endpunkt einer Bohrung bzw. einen Aufsetzpunkt auf einem Werkstück, entlang einer Bohrungsrichtung und bis zu einer Bohrungstiefe verläuft.

Durch solche Werkzeugbahnbedingungen können insbesondere Freiheitsgrade und/oder Zwangsbedingungen eines Werkzeugs berücksichtigt werden. Dabei beschreibt ein Freiheitsgrad eines Werkzeugs allgemein eine zulässige Position oder Positionsänderung, beispielsweise eine Verschiebung oder Drehung, während eine Zwangsbedingung eine Position oder Positionsänderung sperrt oder nur in Abhängigkeit eines oder mehrerer Freiheitsgrade zulässt. Freiheitsgrade und Zwangsbedingungen können beispielsweise relativ zum virtuellen Bauteil, das mit dem virtuellen Werkzeug bearbeitet werden soll, oder relativ zum kartesischen Raum definiert sein.

Beispielsweise soll sich bei bestimmten Klebstoffen und Applikationsarten eine Klebepistole immer oberhalb der Klebestelle befinden, um eine Verschmutzung der Klebepistole durch herabtropfenden Klebstoff zu verhindern, und bei einem Abfahren einer Klebebahn umso stärker in Fahrtrichtung geneigt werden, je schneller sich die Klebepistole relativ zum Bauteil bewegt. Ersteres kann über eine Zwangsbedingung auf kartesischer Basis realisiert werden, die eine Orientierung der Klebepistole mit Austrittsöffnung nach oben sperrt, letzteres über eine Zwangsbedingung auf Bauteilbasis, die einen Neigungswinkel der Klebepistole in Abhängigkeit von ihrer Fahrgeschwindigkeit vorgibt. Umgekehrt kann beispielsweise einem Bohrer ein Freiheitsgrad um seine Drehachse zugeordnet werden, da eine Drehung des Werkzeugs um diese Achse auf den Prozess keinen signifikanten Einfluss hat. Vorzugsweise werden solche Freiheitsgrade und Zwangsbedingungen oder andere Werkzeugbahnbedingungen bei der Generierung der Werkzeugbahn durch die Werkzeugbahngeneriereinrichtung automatisch berücksichtigt.

Auf Basis des virtuellen Werkzeugs und des hiermit zu bearbeitenden virtuellen Bauteils wird nun durch die Werkzeugbahngeneriereinrichtung eine virtuelle Werkzeugbahn generiert. In einer bevorzugten Ausführung werden hierzu Konturmerkmale des zu bearbeitenden virtuellen Bauteils erfasst, etwa Eckpunkte, Kanten, Flächen, Krümmungsextrema oder dergleichen. Vorzugsweise hängen die zu erfassenden Konturmerkmale dabei von den dem gewählten virtuellen Werkzeug zugeordneten Werkzeugbahnbedingungen ab. Wurde beispielsweise als virtuelles Werkzeug eine Klebepistole gewählt, der als Werkzeugbahnbedingung zugeordnet ist, dass eine Werkzeugbahn längs einer Kante oder auf einer Fläche verläuft, so werden als Konturmerkmale Kanten bzw. Flächen des virtuellen Bauteils erfasst. Wurde andererseits ein Vakuumgreifer als virtuelles Werkzeug gewählt, dem als Werkzeugbahnbedingung zugeordnet ist, dass der Greifer an ausreichend großen, ebenen Flächen haften kann, können als Konturmerkmale beispielsweise Flächen erfasst werden, die für diesen Greifer gut handhabbar sind. In der bevorzugten Ausgestaltung eines 3D-Editors kann hierzu eine Schnappfunktionalität vorgesehen sein, die bei Aktivierung mittels eines Eingabegeräts durch den Bediener diejenige Kontur, i.e. Punkt, Kante, Fläche oder dergleichen, erfasst, der eine Visualisierung des virtuellen Werkzeugs jeweils am nächsten liegt.

Zusätzlich oder alternativ können zum Generieren der virtuellen Werkzeugbahn auch Werkzeugpositionen unabhängig von einer Bauteilkontur eingegeben werden. So kann es beispielsweise zum Abkühlen eines Werkzeuges vorteilhaft sein, dieses zwischen zwei Kontakten mit einem Bauteil in eine bauteilferne Position zu führen. Solche Werkzeugpositionen können beispielsweise in einem 3D-Editor durch Anklicken einer dreidimensional visualisierten Position des virtuellen Werkzeugs relativ zum Bezugssystem eingegeben werden. Auf diese Weise kann ähnlich wie beim herkömmlichen Teachen beispielsweise eine TCP-Position angefahren werden, was die intuitive Bedienbarkeit verbessert und die Modifikation von automatisch generierten Werkzeugbahnen vereinfacht.

Auf Basis von Werkzeugpositionen für das virtuelle Werkzeug, die insbesondere wie vorstehend beschrieben durch Erfassen von Konturmerkmalen und/oder Eingabe von Werkzeugpositionen unabhängig von einer Bauteilkontur eingegeben werden können, wird die virtuelle Werkzeugbahn vorzugsweise mittels eines Bahngenerators generiert. Bevorzugt wird hierzu ein Bahngenerator verwendet, wie er auch einer Manipulatorsteuerung zugrunde liegt. Ein Bahngenerator kann beispielsweise einzelne Werkzeugpositionen in an sich bekannter Weise linear, zirkular, durch Splines oder überschleifend interpolieren. Ein Vorteil der Verwendung eines auch in einer Manipulatorsteuerung implementierten Bahngenerators liegt neben dessen Verfügbarkeit insbesondere darin, dass der reale Manipulator eine so generierte Werkzeugbahn sehr genau realisieren kann.

Die solcherart generierte Werkzeugbahn wird vorzugsweise als Objekt des objektorientierten Prozessdatenmodells abgespeichert, das den virtuellen Manipulatorsprozess abbildet.

Ist eine virtuelle Werkzeugbahn generiert, wählt der Bediener oder eine Manipulatorauswahlvorrichtung eine virtuelle Manipulatorkinematik, die erfindungsgemäß durch eine Kinematikladeeinrichtung bereitgestellt und geladen wird. Eine Manipulatorkinematik beschreibt dabei die Kinematik eines Manipulators, sie kann beispielsweise die Vorwärts- und/oder Rückwärtstransformation, insbesondere die mathematische Beschreibung der kinematischen Kette umfassen, welche die Achswerte eines Manipulators auf eine Position, i.e. Lage und/oder Orientierung eines Referenzkoordinatensystems, insbesondere des TCPs bzw. eines Werkzeugs abbildet (Vorwärtstransformation oder -kinematik) bzw. umgekehrt die zum Anfahren einer vorgegebenen Werkzeugposition erforderlichen Achsstellungen ergibt (Rückwärtstransformation oder -kinematik). Aus der Manipulatorkinematik können sich auch Erreichbarkeiten, i.e. ein maximal möglicher Arbeitsraum des Manipulators, Zwangslagen, insbesondere singuläre Posen und dergleichen ergeben. Eine Manipulatorauswahlvorrichtung kann dabei eine geeignete virtuelle Manipulatorkinematik automatisch, beispielsweise auf Basis vorgegebener Randbedingungen und Gütekriterien, etwa der Verfügbarkeit, der Kosten, der Geeignetheit oder dergleichen wählen.

Da sich die Manipulatorkinematik aus den Abmessungen und Gelenkpositionen ergibt, ist jedem realen Manipulator eine virtuelle Manipulatorkinematik zuordenbar. Somit kann wiederum aus einer Bibliothek möglicher Manipulatorkinematiken, der beispielsweise von einem Roboterhersteller zur Verfügung gestellt wird, eine virtuelle Manipulatorkinematik ausgewählt und mit dem virtuellen Werkzeug verknüpft werden. Dies kann vom Anwender oder vom Programm durchgeführt werden. Beispielsweise wird hierzu ein Referenzkoordinatensystem, insbesondere ein TCP der virtuellen Manipulatorkinematik, in einer vorgegebenen, vorzugsweise konstanten Relativposition zu dem virtuellen Werkzeug positioniert, über welche eine Synchronisation zwischen Werkzeug und Manipulator realisiert wird - ein virtueller Manipulator "greift" sozusagen das virtuelle Werkzeug.

Für die virtuelle Manipulatorkinematik kann eine Basisposition in dem Bezugssystem bestimmt werden, die beispielsweise die Position, i.e. Lage und/oder Orientierung eines ortsfesten Koordinatensystems einer Manipulatorbasis, die sogenannte kinematische Wurzel, relativ zu dem Bezugssystem definiert. Hierzu kann beispielsweise der Anwender ein Basiskoordinatensystem der virtuellen Manipulatorkinematik mittels des 3D-Editors in dem Bezugssystem positionieren, den Manipulator also beispielsweise virtuell in eine Montagezelle stellen. Hieraus ergeben sich dann dessen Pose bzw. die Achsstellungen, die das Referenzkoordinatensystem der virtuellen Manipulatorkinematik in der vorgegebenen Relativposition zu dem virtuellen Werkzeug positionieren, beispielsweise den TCP des virtuellen Manipulators mit einem TCP des virtuellen Werkzeuges zur Deckung bringen. Die Bestimmung der Basisposition kann jedoch auch automatisiert erfolgen, indem etwa die virtuelle Manipulatorkinematik mit Mittelwerten für die jeweiligen Gelenke bzw. Achsen mit einer Werkzeugposition der virtuellen Werkzeugbahn, etwa einem Anfangs-, End- oder Mittelpunkt verbunden werden. Es wird also sozusagen ein virtueller Manipulator, dessen Gelenke sich alle in Mittelstellung befinden, mit seinem TCP an das virtuelle Werkzeug gehängt, welches sich in der Mitte der Werkzeugbahn befindet - auf diese Weise kann ein virtueller Manipulator zunächst derart im Bezugssystem positioniert werden, dass er mit großer Wahrscheinlichkeit die gesamte Werkzeugbahn realisieren kann. Auch Mischformen sind möglich, um beispielsweise einen redundanten Manipulator optimal zu platzieren.

Bereits in diesem Stadium können ungeeignete Manipulatorkinematiken bzw. Basispositionen erkannt werden, mit denen sich beispielsweise die geplante Werkzeugbahn nicht realisieren lässt oder die Manipulatorkinematik dabei eine ungünstige Pose, etwa eine singuläre oder mit dem Bauteil oder der Zelle kollidierende Pose einnimmt.

Ist die Basisposition der virtuellen Manipulatorkinematik sowie ihre Verknüpfung mit dem virtuellen Werkzeug festgelegt, ergibt sich eine virtuelle Manipulatorbahn auf Basis der virtuellen Werkzeugbahn und der virtuellen Manipulatorkinematik insbesondere durch Lösen der Rückwärtskinematik, welche die Werkzeugpositionen der virtuellen Werkzeugbahn auf Posen der virtuellen Manipulatorkinematik abbildet. Sofern die virtuelle Manipulatorkinematik bezüglich der virtuellen Werkzeugbahn redundant ist, also mehr Freiheitsgrade aufweist als zur Bewegung des Werkzeugs längs der virtuellen Werkzeugbahn erforderlich, können geeignete Nebenbedingungen zur Generierung einer optimalen eindeutigen virtuellen Werkzeugbahn genutzt werden, indem etwa ein Abstand zu singulären Posen maximiert wird, Abweichungen von Gelenkmittelstellungen minimiert werden oder dergleichen.

Die solcherart von einer Manipulatorbahngeneriereinrichtung automatisch generierte Manipulatorbahn wird vorzugsweise ebenfalls als Objekt des objektorientierten Prozessdatenmodells abgespeichert, das den virtuellen Manipulatorsprozess abbildet.

Nach einer bevorzugten Ausführung der vorliegenden Erfindung können Prozesswerte editiert werden, nachdem die virtuelle Werkzeugbahn generiert worden ist, also gleichermaßen bevor oder nachdem die virtuelle Manipulatorbahn generiert wurde. Prozesswerte beschreiben wie einleitend erläutert Aktionen eines Werkzeuges, also beispielsweise das Aktivieren bzw. Deaktivieren einer Schweißzange oder Klebepistole, das öffnen bzw. Schließen eines Greifers, das Aufbringen eines Drehmomentes auf einen Bohr- oder Fräskopf oder dergleichen. Ist also beispielsweise die Bahn einer Klebepistole generiert, so kann der Anwender die Klebstoffabgabe längs dieser Bahn vorgeben, etwa das Klebstoffvolumen in bestimmten Bahnabschnitten erhöhen oder Bahnabschnitte ohne Aufbringen von Klebstoff abfahren. Hierzu ist vorzugsweise ein zwei- und/oder dreidimensionaler Prozesswerteditor vorgesehen. Ein zweidimensionaler Prozesswerteditor zeigt hierzu beispielsweise über der Zeit oder der Werkzeugbahnkoordinate als Abszisse einen oder mehrere Prozesswerte, etwa das ausgebrachte Klebstoffvolumen, das Drehmoment eines Bohrers oder dergleichen, als Ordinate. In dieser Ansicht kann der Anwender durch Editieren des Verlaufs, beispielsweise Setzen neuer oder Verschieben existierender Prozesswerte mittels Maus oder einem anderen Eingabegerät, die Aktionsfolge des Werkzeugs im Manipulatorprozess auf einfache und intuitive Weise vorgeben. Ein dreidimensionaler Prozesswerteditor zeigt beispielsweise mittels Punkten auf der virtuellen Werkzeugbahn, an denen sich ein Prozesswert ändert, mittels farblicher Darstellung der Bahn in Abhängigkeit vom Prozesswert und/oder mittels einer Achterbahndarstellung eines Prozesswertes über der virtuellen Werkzeugbahn oder dergleichen einen oder mehrere Prozesswerte, beispielsweise das ausgebrachte Klebstoffvolumen.

Unter einem Editieren von Prozesswerten wird dabei gleichermaßen das Initialisieren bzw. Anlegen als auch die Veränderung bzw. Vorgabe bestimmter quantitativer Werte definierter Prozesswerte verstanden. So kann beispielsweise ein Bediener bei einer Schweißzange definieren, ob die Menge zugeführten Schweißdrahtes als ein Prozesswert abgebildet wird, und dann diesen Prozesswert längs der Manipulator- bzw. Werkzeugbahn vorgeben, beispielsweise abschnittsweise bestimmte quantitative Werte vorgeben.

In einer bevorzugten Ausführung der vorliegenden Erfindung kann die virtuelle Werkzeugbahn, die virtuelle Manipulatorbahn oder der komplette virtuelle Manipulatorprozess simuliert, insbesondere graphisch visualisiert bzw. animiert werden. Die virtuelle Werkzeugbahn einschließlich der Änderung der Prozesswerte kann dabei vorteilhaft unabhängig von der gewählten Manipulatorkinematik simuliert werden, nachdem die virtuelle Werkzeugbahn generiert worden ist.

Wenn zur Generierung der virtuellen Werkzeugbahn ein Bahngenerator verwendet wird, wie er auch einer Manipulatorsteuerung zugrunde liegt, entspricht die sich hieraus ergebende virtuelle Manipulatorbahn vorteilhaft bereits sehr genau der Bahn, die ein realer Manipulator bei Realisierung des Manipulatorprozesses abfährt.

Ein weiterer Vorteil liegt in der schnelleren Reaktion auf Änderungen der virtuellen Werkzeug- oder Manipulatorbahn: Während bei bisherigen Verfahren zunächst von einer Programmierumgebung in Abhängigkeit vom Manipulatortyp das komplette Manipulatorprogramm erzeugt, an die Manipulatorsteuerung übergeben und von dieser verarbeitet werden muss und erst aus den sich hieraus ergebenden Ergebnissen von der Programmierumgebung die Manipulator- bzw. Werkzeugbahn visualisiert wird, kann eine virtuelle Werkzeug- oder Manipulatorbahn, die mit einem Bahngenerator generiert wird, wie er auch einer Manipulatorsteuerung zugrunde liegt, deutlich schneller abgetastet werden. Der Grund hierfür ist, dass nicht der komplette Programmcode erzeugt und verarbeitet werden muss, sondern direkt über den integrierten Bahngenerator eine Bahn generiert und angezeigt werden kann, so dass auf Eingaben des Bedieners, welche die Werkzeug- oder Manipulatorbahn ändern, beispielsweise die zusätzliche Eingabe von Werkzeugpositionen, rasch reagiert und die sich ergebende geänderte virtuelle Werkzeug- oder Manipulatorbahn visualisiert werden kann. Dies erhöht nochmals die intuitive Bedienbarkeit.

Die Simulation ermöglicht eine Überprüfung des erfindungsgemäß generierten Manipulatorprozesses. Hierbei kann insbesondere das Eintreten von kinematischen Bedingungen wie beispielsweise kinematischen Zwangslagen, nicht erreichbaren Posen oder dergleichen frühzeitig in der Planung erkannt werden. Zusätzlich oder alternativ kann eine visuelle oder automatische Kollisionsprüfung erfolgen. Neben solchen rein kinematischen Bedingungen können zusätzlich oder alternativ auch dynamische Bedingungen geprüft werden, etwa, ob in allen Posen Traglastgrenzen eingehalten werden, Antriebs- bzw. Bremsleistungen zur Realisierung der Manipulatorbahn ausreichen und dergleichen. Vorzugsweise wird eine Warnung ausgegeben, wenn kinematische oder dynamische Bedingungen nicht erfüllt sind. Hierzu kann beispielsweise ein entsprechender Bereich der virtuellen Werkzeug- bzw. Manipulatorbahn im 3D-Editor eingefärbt oder auf andere Weise markiert werden, in dem sich der virtuelle Manipulator in oder in der Nähe einer kinematischen Zwangslagen, Kollision, Tragslastüberschreitung oder dergleichen befindet.

Eine Simulation des gesamten Manipulatorprozesses oder der Manipulator- bzw. Werkzeugbahn bietet vorteilhaft auch die Möglichkeit, diese(n) mittels mathematischer Methoden zu optimieren, etwa ein optimales Geschwindigkeitsprofil längs der virtuellen Werkzeugbahn zu bestimmen, zur Bauteilbearbeitung optimale Werkzeugpositionen bzw. Manipulatorposen zu ermitteln oder dergleichen.

Mit dem vorstehend erläuterten erfindungsgemäßen Verfahren kann rechnergestützt ein virtueller Manipulatorprozess geplant und gegebenenfalls überprüft bzw. optimiert werden. In einer besonders bevorzugten Ausführung der vorliegenden Erfindung kann ein solcher Manipulatorprozess mit einem oder mehreren realen Manipulatoren auch einfach und effizient realisiert werden.

Hierzu wird in einer bevorzugten Ausführung eine Steueranweisung für einen Manipulator auf Basis des virtuellen Manipulatorprozesses generiert. Häufig stehen unabhängig voneinander mehrere reale Manipulatoren, beispielsweise Industrieroboter, und Manipulatorsteuerungen, beispielsweise Steuerschränke, zur Verfügung. Daher können insbesondere verschiedene virtuelle Manipulatorsteuerungen vorgesehen sein, die dem Bediener beispielsweise in einer Bibliothek bereitgestellt und aus dieser geladen werden. Es wird sozusagen die Realität der verschiedenen Manipulatoren und Manipulatorsteuerungen durch das Bereitstellen verschiedener virtueller Manipulatorkinematiken und -steuerungen nachgebildet. Auf Basis der vom Bediener gewählten virtuellen Manipulatorsteuerung und der umzusetzenden virtuellen Manipulatorbahn bzw. des umzusetzenden virtuellen Manipulatorprozesses wird dann automatisch eine Steueranweisung generiert, i.e. eine Abfolge von Befehlen erzeugt, die den virtuellen Manipulatorprozess, insbesondere die virtuelle Manipulatorbahn und Aktionsfolge des Werkzeuges realisiert. Wie bei der plattformabhängigen Überführung eines Computerprogramms aus einer höheren Programmiersprache in maschinenlesbaren Code für verschiedene Plattformen kann so auf einfache Weise aus dem virtuellen Manipulatorprozess eine Steueranweisung für verschiedene Manipulatorsteuerungen generiert werden. Anschließend wird die Steueranweisung auf eine reale Manipulatorsteuerung übertragen.

Besonders vorteilhaft werden die Steueranweisung in der realen Manipulatorsteuerung und der virtuelle Manipulatorprozess in der Folge konsistent gehalten. So kann es beispielsweise vorkommen, dass ein Bediener vor Ort die Steueranweisung des Manipulators ändert, etwa manuell eine Roboterbahn in einer Montagezelle nach-teacht. Andererseits können sich nach der Übertragung der Steueranweisung auf die Manipulatorsteuerung Änderungen des geplanten Manipulatorprozesses ergeben, etwa zusätzliche Arbeitsaufgaben oder eine Änderung des Prozesswertverlaufs.

Daher wird in einer bevorzugten Ausführung der vorliegenden Erfindung ein Abgleichen der Steueranweisung des Manipulators und des virtuellen Manipulatorprozesses bei Änderungen der Steueranweisung oder des virtuellen Manipulatorprozesses durchgeführt, indem etwa bei einer Änderung des virtuellen Manipulatorprozesses erneut eine Steueranweisung auf Basis des neuen virtuellen Manipulatorprozesses generiert und auf die reale Manipulatorsteuerung übertragen wird. Umgekehrt kann eine Änderung der Steueranweisung in der realen Manipulatorsteuerung eindeutig auf den virtuellen Manipulatorprozess abgebildet werden.

Indem der virtuelle Manipulatorprozess, vorzugsweise in Form eines objektorientierten Prozessdatenmodells, abgespeichert und mit der Steueranweisung in der realen Manipulatorsteuerung konsistent gehalten wird, wird die Umsetzung von Manipulatoraufgaben deutlich erleichtert. So kann beispielsweise ein Bediener mit einem tragbaren Rechner, auf dem ein Computerprogramm zur Durchführung eines erfindungsgemäßen Verfahrens implementiert und der virtuelle Manipulatorprozess abgespeichert ist, direkt vor Ort auf einfache Weise eine Umplanung des Manipulatorprozess durchführen oder diesen auf andere Manipulatoren übertragen. Die Editierbarkeit abgespeicherter und vorzugsweise mit realen Steueranweisungen konsistent gehaltener und dadurch in der Praxis weiter verbesserter virtueller Manipulatorprozesse erlaubt zudem den Aufbau einer Prozessbibliothek, die die Generierung neuer, ähnlicher Manipulatorprozesse auf Basis bereits abgespeicherter virtueller Manipulatorprozesse erleichtert. Die Abspeicherung als objektorientiertes Prozessdatenmodell ermöglicht eine raschere und zuverlässigere Prüfung und Modifikation des generierten Manipulatorprozesses.

Durch die rechnergestützte Generierung eines virtuellen Manipulatorprozesses kann dieser vorteilhaft mit verschiedenen realen Manipulatoren und Manipulatorsteuerungen realisiert werden. In einer bevorzugten Ausführung der vorliegenden Erfindung wird daher die Manipulatorsteuerung, auf die die Steueranweisung übertragen wird, aus einer Mehrzahl von verfügbaren Manipulatorsteuerungen ausgewählt. Stehen beispielsweise in einer realen Montagezelle mehrere freie Roboter mit gleicher Kinematik und eigenen Manipulatorsteuerungen zur Verfügung, wird die Steueranweisung an die Manipulatorsteuerung eines auswählbaren Roboters aus dieser Gruppe übertragen. Auswahl und/oder Übertragung erfolgt bevorzugt über ein Netzwerk,

Zur Umsetzung eines virtuellen Manipulatorprozesses mit einem realen Manipulator ist es aufgrund der Abweichungen zwischen Realität und virtuellem Modell vorteilhaft, den realen Manipulator zunächst entsprechend zu kalibrieren. Hierzu fährt der Bediener beispielsweise mit dem Werkzeug des Manipulators eine oder mehrere Kalibrierpositionen an, etwa Eckpunkte eines Werkstückes, Montagetisches oder dergleichen. In der Manipulatorsteuerung wird die Steueranweisung dann auf Basis dieser Kalibrierpositionen kalibriert, beispielsweise ein konstanter Offset in einzelnen Gelenken aufaddiert oder dergleichen, so dass der reale Manipulator relativ zum Werkstück, Montagetisch oder dergleichen die korrekte Manipulatorbahn abfährt.

In einer bevorzugten Ausführung der vorliegenden Erfindung werden hierzu bereits bei Generierung des virtuellen Manipulatorprozesses eine oder mehrere virtuelle Kalibrierpositionen definiert. Hierzu können bevorzugt Konturmerkmale eines virtuellen Bauteils erfasst werden. Zusätzlich werden Informationen zu den Kalibrierpositionen abgespeichert, beispielsweise Tabellen der Achswinkel oder zwei- oder dreidimensionale Bilder der Kalibrierpositionen generiert und abgespeichert, die etwa eine Draufsicht auf die zur Kalibrierung anzufahrende Punkte oder Flächen aus einer wählbaren oder fest vorgegebenen Perspektive zeigen, beispielsweise aus Sicht längs eines Manipulatorendgliedes, aus Sicht einer Manipulatorbasis oder aus Sicht einer ausgewählten Position im Bezugssystem.

Die Kalibrierpositionen werden dann auf die Manipulatorsteuerung übertragen. Während eines Kalibrierens des Manipulators werden dem Bediener dann diese Informationen, beispielsweise Bilder auf einem Display der Manipulatorsteuerung, angezeigt. Auf diese Weise weiß der Bediener intuitiv, welche Positionen er zur Kalibrierung anfahren soll, und muss lediglich die in den Bildern angezeigte, vorzugsweise durch ein Koordinatensystem oder dergleichen markierte, Position mit dem Manipulator anfahren, um diesen zu kalibrieren.

Eine erfindungsgemäße Vorrichtung zur Durchführung eines Verfahrens nach der vorliegenden Erfindung umfasst eine Positioniereinrichtung, eine Werkzeugladeeinrichtung, eine Werkzeugbahngeneriereinrichtung, eine Kinematikladeeinrichtung und eine Manipulatorbahngeneriereinrichtung sowie vorzugsweise eine Konturmerkmalerfassungseinrichtung, eine Werkzeugpositionseingabeeinrichtung, einen Bahngenerator, eine Bahnsimulier- und/oder -prüfeinrichtung, eine Prozesswerteditiereinrichtung, eine Steueranweisungsgeneriereinrichtung, eine Speichereinrichtung und/oder weitere Einrichtungen zur Implementierung vorstehend beschriebener Verfahrensschritte. Diese Einrichtungen können beispielsweise gemeinsam auf einem Rechner mit Eingabeeinrichtung, beispielsweise Tastatur, Maus, Joystick oder ähnlichem, und Ausgabeeinrichtung, beispielsweise Bildschirm, implementiert oder auch auf verschiedenen Rechnern verteilt sein.

Weitere Vorteile und Merkmale ergeben sich aus den Unteransprüchen und den Ausführungsbeispielen. Hierzu zeigt, teilweise schematisiert:
- Fig. 1:: einen 3D-Editor nach einer Ausführung der vorliegenden Erfindung;
- Fig. 2:: einen 2D-Prozesswerteditor nach einer Ausführung der vorliegenden Erfindung und den 3D-Editor nach Fig. 1;
- Fig. 3:: einen Industrieroboter und eine Vorrichtung nach einer Ausführung der vorliegenden Erfindung; und
- Fig. 4:: den Ablauf eines Verfahrens nach einer Ausführung der vorliegenden Erfindung.

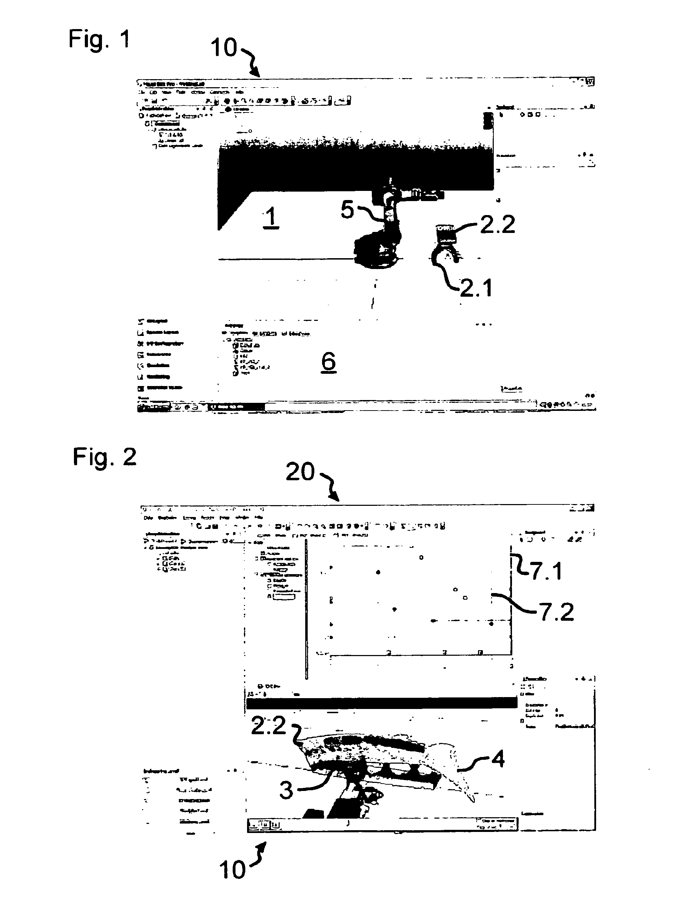

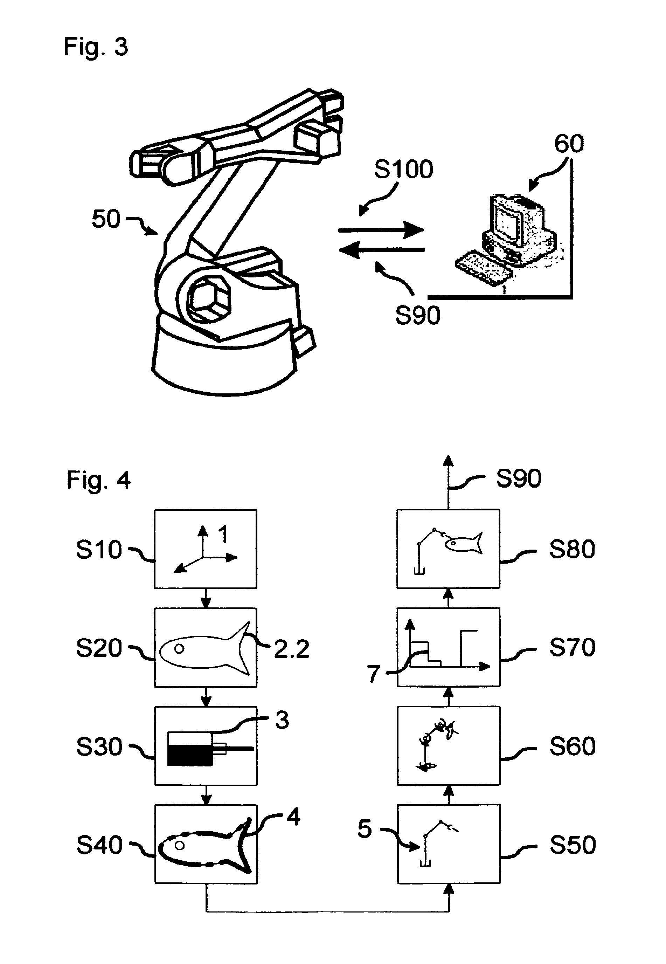

Fig. 1, 2 zeigen Ansichten einer Anzeige eines 3D-Editors 10 bzw. 2D-Prozesswerteditors 20, mit denen ein Verfahren nach einer Ausführung der vorliegenden Erfindung, wie es schematisch in Fig. 4 dargestellt ist, auf einem Rechner 60 ausgeführt, der in Fig. 3 dargestellt ist und eine Vorrichtung zur rechnergestützten Generierung eines Manipulatorprozesses bildet, die zur Durchführung des Verfahrens nach Fig. 4 eingerichtet ist und die insbesondere eine Positioniereinrichtung, eine Werkzeugladeeinrichtung, eine Werkzeugbahngeneriereinrichtung, eine Kinematikladeeinrichtung und eine Manipulatorbahngeneriereinrichtung aufweist (nicht dargestellt).

Zur rechnergestützten Generierung eines Manipulatorprozesses mittels eines Verfahrens nach einer Ausführung der vorliegenden Erfindung, wie es schematisch in Fig. 4 dargestellt ist, wird zunächst in einem Schritt S10 ein Bezugssystem 1 aus einer Bibliothek 6 (vgl. Fig. 1) gewählt, beispielsweise eine Montagezelle oder ein Weltkoordinatensystem. Dieses wird im 3D-Editor 10 dargestellt (vgl. Fig. 1) und als Objekt eines objektorientierten Prozessmodells abgespeichert. In einer bevorzugten Ausführung wird dabei stets ein Weltkoordinatensystem als Bezugssystem 1 vorgegeben.

Anschließend werden in einem Schritt S20 virtuelle Bauteile 2 relativ zu dem gewählten Bezugssystem 1 positioniert. Hierzu wird aus der Bibliothek 6 beispielsweise ein Montagetisch 2.1 ausgewählt und mittels einer Positioniereinrichtung, etwa einer Maus des Rechners 60 in Verbindung mit entsprechender Software, in dem Bezugssystem 1 positioniert. Ein weiteres virtuelles Bauteil in Form eines zu bearbeitenden Werkstückes 2.2, welches zur Verdeutlichung eine fischartige Kontur aufweist, wird in dem Bezugssystem 1 auf dem Montagetisch 2.1 positioniert. In dem objektorientierten Prozessmodell werden hierzu Objekte eingefügt, die mit dem Bezugssystem-Objekt kinematisch entsprechend verknüpft sind. Das virtuelle Bauteil 2.2 wird dabei aus CAD-Daten des zu bearbeitenden Werkstückes generiert und ebenfalls in der Bibliothek 6 bereitgestellt, aus der es dann geladen werden kann.

Nun wird in einem Schritt S30 ein virtuelles Werkzeug in Form einer Klebepistole 3 gewählt, indem aus der Bibliothek 6 des 3D-Editors 10 ein entsprechendes Objekt in das objektorientierten Prozessmodell geladen wird.

Anschließend wird in einem Schritt S40 eine virtuelle Werkzeugbahn 4 generiert. Nachdem der Suchbereich spezifiziert worden ist, werden vom Rechner 60 im 3D-Editor 10 geeignete Konturmerkmale, z.B. Kanten, Punkte, Flächen und/oder Polygone, auf dem virtuellen Bauteil 2.2 als Ausgangswert für eine virtuelle Werkzeugbahn 4 erfasst. Diese kann nun dadurch modifiziert werden, dass Werkzeugpositionen auf dieser Bahn entfernt oder zusätzliche Werkzeugpositionen hinzugefügt und/oder die Orientierungen der Werkzeugpositionen angepasst werden, so dass sich die in Fig. 2 dargestellte virtuelle Werkzeugbahn 4 ergibt. Nachdem evtl. erforderliche Stützpunkte der virtuellen Werkzeugbahn 4 eingegeben wurden, werden diese mittels eines Bahninterpolators, wie er auch in einer Robotersteuerung implementiert ist, verbunden und so die virtuelle Werkzeugbahn 4 generiert. Hierbei werden Werkzeugbahnbedingungen berücksichtigt, beispielsweise eine Zwangsbedingung, die Orientierungen der Klebepistole 3 mit Austrittsöffnung nach oben sperrt. Die Werkzeugbahn kann zu diesem Zeitpunkt bereits simuliert, insbesondere graphisch dargestellt werden.

In einem Schritt S50 wird eine virtuelle Manipulatorkinematik 5 gewählt. Hierzu sind in der Bibliothek 6 virtuelle Manipulatorkinematiken verschiedener einsetzbarer realer Manipulatoren, unter anderem des Industrieroboters 50 (Fig. 3) abgespeichert. Indem der Anwender eine dieser virtuellen Manipulatorkinematiken auswählt, eine Position für ihr Basiskoordinatensystem im Bezugssystem 1 vorgibt und den TCP der virtuellen Manipulatorkinematik 5 mit einem Referenzkoordinatensystem des virtuellen Werkzeugs 3 verbindet, "stellt" er virtuell den Roboter 50 in die Montagezelle, der virtuell die Klebepistole 3 "greift". Im Programm wird hierzu die ausgewählte von den bereitgestellten virtuellen Manipulatorkinematiken geladen und mit dem objektorientierten Prozessmodell verknüpft.

Anhand der generierten virtuellen Werkzeugbahn 4 generiert in einem Schritt S60 die Manipulatorbahngeneriereinrichtung eine virtuellen Manipulatorbahn, indem aus der Rückwärtstransformation der virtuellen Manipulatorkinematik Gelenkwinkelverläufe für die einzelnen Achsen der virtuellen Manipulatorkinematik 5 bestimmt werden.

In einem Schritt S70 werden nun mittels des 2D-Prozesswerteditors 20 Prozesswerte 7 für das virtuelle Werkzeug 3 editiert. Im Ausführungsbeispiel werden hierzu längs der Werkzeugbahnkoordinate (Abszisse) Werte für Klebstoffdruck 7.1 und -volumen 7.2 eingegeben.

Nun wird in einem Schritt S80 der gesamte virtuelle Manipulatorprozess, also die Bahn 4 der virtuellen Klebepistole 3, die Bahn des virtuellen Manipulators 5, sowie die Aktionsfolge des Werkzeugs, i.e. der Verlauf der Prozesswerte 7 simuliert. Dabei werden insbesondere kinematische Bedingungen wie singuläre Posen, Zwangslagen, Erreichbarkeiten, Kollisionen, und dynamische Bedingungen, insbesondere Tragfähigkeiten und Motorlastgrenzen geprüft und die Bahnen bzw. Prozesswertverläufe gegebenenfalls korrigiert. Zusätzlich erfolgt auch eine mathematische Optimierung des virtuellen Manipulatorprozesses hinsichtlich geeigneter Gütekriterien, etwa der Prozesszeit.

Anschließend wird in Schritt S80 eine Steueranweisung für einen Manipulator auf Basis des virtuellen Manipulatorprozesses generiert, indem die abgespeicherte Manipulatorbahn in entsprechende Steuerbefehle für eine reale Manipulatorsteuerung übersetzt wird. Hierzu kann eine entsprechende virtuelle Manipulatorsteuerung aus der Bibliothek 6 ausgewählt werden, so dass vorteilhaft derselbe Manipulatorprozess mit einer Vielzahl unterschiedlicher Manipulatoren bzw. Manipulatorsteuerungen umgesetzt werden kann, die jeweils unterschiedliche Programmiersprachen bzw. Steuerbefehle nutzen. Diese Steueranweisung wird dann in einem Schritt S90 auf eine Manipulatorsteuerung eines realen Roboters 50 übertragen.

Während der Abarbeitung des Manipulatorprozesses durch diesen Roboter 50 erfolgt bei Änderungen der Steueranweisung in der Manipulatorsteuerung, beispielsweise durch einen Bediener vor Ort, der den Prozess besser an reale Randbedingungen anpasst, oder Änderungen des virtuellen Manipulatorprozesses, beispielsweise zur Ergänzung weiterer Prozessaufgaben wie dem Aufbringen einer zusätzlichen Klebenaht, ein Abgleich der Steueranweisung des Manipulators und des virtuellen Manipulatorprozesses. Hierzu tauschen der Rechner 60, auf dem der virtuelle Manipulatorprozess als objektorientiertes und entsprechend einfach zu modifizierendes Prozessdatenmodell abgespeichert ist, und der Manipulatorsteuerung des realen Roboters 50 bei Änderung des virtuellen Manipulatorprozesses bzw. der Steueranweisung in einem Schritt S100 bzw. S90 Daten aus.

Stehen in einer Montagezelle mehrere Manipulatoren oder Manipulatorsteuerungen zur Verfügung, die jeweils zur Umsetzung des virtuellen Manipulatorprozesses geeignet sind, wird vor dem Übertragen der Steueranweisung in Schritt S90 ein verfügbarer Manipulator bzw. eine verfügbare Manipulatorsteuerung aus dieser Mehrzahl ausgewählt.

Vor Inbetriebnahme des Roboters 50 soll dieser kalibriert werden, so dass er den geplanten Manipulatorprozess möglichst exakt durchführt. Hierzu werden im 3D-Editor 10 virtuelle Kalibrierpositionen des Manipulators generiert, beispielsweise markante Eckpunkte des fischförmigen Bauteils 2.2. Dabei werden Bildern der Kalibrierpositionen generiert, die beispielsweise in dreidimensionaler Ansicht, wie sie in Fig. 1 oder 2 gezeigt ist, die jeweils gewählte Kalibrierposition darstellt, i.e. die Position des Werkzeugs 3, welches die markante Eckpunkte des fischförmigen Bauteils 2.2 berührt. Diese Kalibrierpositionen und Bilder werden auf die Manipulatorsteuerung des Roboters 50 übertragen.

Während des Kalibrierens des Roboters 50 durch einen Bediener vor Ort werden dann diese Bilder angezeigt, so dass dem Bediener eine Hilfestellung gegeben wird, welche Position er beim Kalibrieren als nächstes mit dem Roboter 50 anfahren muss. Hierdurch wird die Kalibrierzeit deutlich verkürzt.

### Bezugszeichenliste

- 1: Bezugssystem
- 2: virtuelles Bauteil
- 3: virtuelles Werkzeug
- 4: virtuelle Werkzeugbahn
- 5: virtuelle Manipulatorkinematik
- 6: Katalog
- 7: Prozesswerte
- 10: 3D-Editor
- 20: 2D-Prozesswerteditor
- 50: Industrieroboter
- 60: Rechner

## Patentansprüche

1. Verfahren zur rechnergestützten Generierung einer Manipulatorbahn mit den Schritten:
- Bereitstellen und Laden (S30) eines virtuellen Werkzeuges (3);
- Generieren (S40) einer virtuellen Werkzeugbahn (4) auf Basis eines virtuellen Bauteils (2) und des geladenen virtuellen Werkzeuges (3);
- Bereitstellen und Laden (S50) einer virtuellen Manipulatorkinematik (5);
- Bereitstellen und Laden (S50) einer virtuellen Manipulatorsteuerung;
- Generieren (S60) einer virtuellen Manipulatorbahn auf Basis der virtuellen Werkzeugbahn und der virtuellen Manipulatorkinematik;
- Editieren (S70) von Prozesswerten (7) eines virtuellen Manipulatorprozesses, nachdem die virtuelle Werkzeugbahn generiert worden ist;
- Generieren (S80) einer Steueranweisung für einen Manipulator auf Basis der virtuellen Manipulatorsteuerung und des virtuellen Manipulatorprozesses;
- Übertragen (S90) der Steueranweisung auf eine Manipulatorsteuerung; und
- Abgleichen (S90, S100) der Steueranweisung in der Manipulatorsteuerung und des virtuellen Manipulatorprozesses bei Änderungen der Steueranweisung in der Manipulatorsteuerung oder des virtuellen Manipulatorprozesses,
wobei die virtuelle Manipulatorsteuerung in einer Bibliothek (6) bereitgestellt und aus dieser Bibliothek geladen wird.

2. Verfahren nach Anspruch 1, **dadurch gekennzeichnet, dass**:
- zum Generieren der virtuellen Werkzeugbahn Konturmerkmale des virtuellen Bauteils erfasst werden;
- zum Generieren der virtuellen Werkzeugbahn von einem Anwender eingegebene Positionen des virtuellen Werkzeuges erfasst werden;
- zum Generieren der virtuellen Werkzeugbahn Freiheitsgrade und/oder Zwangsbedingungen des virtuellen Werkzeuges berücksichtigt werden; und/oder
- die virtuelle Werkzeug- und/oder Manipulatorbahn mittels eines Bahngenerators generiert wird.

3. Verfahren nach einem der vorhergehenden Ansprüche, **gekennzeichnet durch** den Schritt:
- Simulieren der virtuellen Werkzeugbahn und/oder der virtuellen Manipulatorbahn (S80).

4. Verfahren nach einem der vorhergehenden Ansprüche, **gekennzeichnet durch** den Schritt:
- Prüfen (S80) der virtuellen Werkzeugbahn und/oder der virtuellen Manipulatorbahn.

5. Verfahren nach Anspruch 4, **dadurch gekennzeichnet dass** das Prüfen der virtuellen Manipulatorbahn umfasst:
- Prüfen von kinematischen Bedingungen;
- Prüfen auf Kollision; und/oder
- Prüfen von dynamischen Bedingungen.

6. Verfahren nach einem der vorhergehenden Ansprüche, **dadurch gekennzeichnet, dass**:
- die Manipulatorsteuerung, auf die die Steueranweisung übertragen wird, als eine verfügbare Manipulatorsteuerung aus einer Mehrzahl von Manipulatorsteuerungen auswählbar ist.

7. Verfahren nach einem der vorhergehenden Ansprüche, **gekennzeichnet durch** die Schritte:
- Generieren von virtuellen Kalibrierpositionen des Manipulators;
- Generieren von Informationen, insbesondere Bildern der Kalibrierpositionen;
- Übertragen der Kalibrierpositionen auf die Manipulatorsteuerung; und
- Anzeigen der Informationen während eines Kalibrierens des Manipulators.

8. Verfahren nach einem der vorhergehenden Ansprüche, **dadurch gekennzeichnet, dass** das virtuelle Bauteil, das virtuelle Werkzeug und/oder die virtuelle Manipulatorkinematik in einer Bibliothek (6) bereitgestellt und aus dieser Bibliothek geladen wird.

9. Verfahren nach einem der vorhergehenden Ansprüche, **gekennzeichnet durch** den Schritt:
- Abspeicherung der virtuellen Werkzeugbahn, der virtuellen Manipulatorbahn und/oder des virtuellen Manipulatorprozesses.

10. Vorrichtung (60) zur rechnergestützten Generierung eines Manipulatorprozesses mit:
- einer Positioniereinrichtung zum Positionieren (S20) eines virtuellen Bauteils (2) relativ zu einem Bezugssystem;
- einer Werkzeugladeeinrichtung zum Laden (S30) eines ausgewählten virtuellen Werkzeuges (3);
- einer Werkzeugbahngeneriereinrichtung zum Generieren (S40) einer virtuellen Werkzeugbahn (4);
- einer Kinematikladeeinrichtung zum Laden (S50) einer ausgewählten virtuellen Manipulatorkinematik (5); und
- einer Manipulatorbahngeneriereinrichtung zum Generieren (S60) einer virtuellen Manipulatorbahn auf Basis der virtuellen Werkzeugbahn und der virtuellen Manipulatorkinematik, wobei die Vorrichtung zur Durchführung eines Verfahrens nach einem der vorhergehenden Ansprüche eingerichtet ist.

11. Computerprogramm, das ein Verfahren nach einem der Ansprüche 1 bis 9 ausführt, wenn es in einer Vorrichtung nach Anspruch 10 abläuft.

12. Computerprogrammprodukt mit Programmcode, der auf einem maschinenlesbaren Träger gespeichert ist und ein Computerprogramm nach Anspruch 11 umfasst.

## Claims

1. A method for computer-assisted generation of a manipulator path comprising the steps:
- providing and loading (S30) of a virtual tool (3);
- generating (S40) a virtual tool path (4) based on a virtual workpiece (2) and the loaded virtual tool (3);
- providing and loading (S50) of a virtual manipulator kinematic (5);
- providing and loading (S50) of a virtual manipulator control;
- generating (S60) a virtual manipulator path based on the virtual tool path and the virtual manipulator kinematic;
- editing (S70) process values (7) of a virtual manipulator process after the virtual tool path has been generated;
- generating (S80) a control instruction for a manipulator based on the virtual manipulator control and on the virtual manipulator process;
- transferring (S90) the control instruction to a manipulator control; and
- aligning (S90, S100) the control instruction in the manipulator control and the virtual manipulator process upon changes of the control instruction in the manipulator control or upon changes of the virtual manipulator process,
wherein the virtual manipulator control is provided in a library (6) and loaded from said library.

2. A method according to claim 1, **characterized in that**:
- for generating the virtual tool path contour features of the virtual workpiece are determined;
- for generating the virtual tool path positions of the virtual tool, which are inputted by a user, are determined;
- for generating the virtual tool path degrees of freedom and/or constraints of the virtual tool are taken into account; and/or
- the virtual tool path and/or the virtual manipulator path are generated by means of a path generator.

3. A method according to one of the preceding claims, **characterized by** the step:
- simulating the virtual tool path and/or the virtual manipulator path (S80).

4. A method according to one of the preceding claims, **characterized by** the step:
- checking (S80) the virtual tool path and/or the virtual manipulator path.

5. A method according to claim 4, **characterized in that** the checking of the virtual manipulator path comprises:
- checking kinematic conditions;
- checking for collision; and/or
- checking dynamic conditions.

6. A method according to one of the preceding claims, **characterized in that**:
- the manipulator control to which the control instruction is transferred is selectable as an available manipulator control from a plurality of manipulator controls.

7. A method according to one of the preceding claims, **characterized by** the steps:
- generating virtual calibration positions of the manipulator;
- generating information, in particular pictures of said calibration positions;
- transferring of said calibration positions to the manipulator control; and
- displaying the information during a calibration of the manipulator.

8. A method according to one of the preceding claims, **characterized in that** the virtual workpiece, the virtual tool and/or the virtual manipulator kinematic is provided in a library (6) and loaded from said library.

9. A method according to one of the preceding claims, **characterized by** the step:
- storing the virtual tool path, the virtual manipulator path and/or the virtual manipulator process.

10. A device for computer-assisted generation of a manipulator process comprising:
- a positioning device for positioning (S20) a virtual workpiece (2) relative to a reference system;
- a tool loading device for loading (S30) a selected virtual tool (3);
- a tool path generating device for generating (S40) a virtual tool path (4);
- a kinematic loading device for loading (S50) a selected virtual manipulator kinematic (5); and
- a manipulator path generating device for generating (S60) a virtual manipulator path based on the virtual tool path and the virtual manipulator kinematic, wherein the device is adapted to carry out a method according to one of the preceding claims.

11. A computer program that carries out a method according to one of the claims 1 to 9, when it runs at a device according to claim 10.

12. A computer program product with program code which is stored on a machine readable carrier and which comprises a computer program according to claim 11.

## Revendications

1. Procédé de génération assistée par ordinateur d'une bande de manipulateur comprenant les étapes consistant à :
- mettre à disposition et charger (S30) un outil virtuel (3) ;
- générer (S40) une bande virtuelle d'outil (4) sur la base d'un élément virtuel (2) et de l'outil virtuel (3) chargé ;
- mettre à disposition et charger (S50) une cinématique virtuelle de manipulateur (5) ;
- mettre à disposition et charger (S50) une commande manuelle de manipulateur ;
- générer (S60) une bande virtuelle de manipulateur sur la base de la bande virtuelle d'outil et de la cinématique virtuelle de manipulateur ;
- éditer (S70) des valeurs de processus (7) d'un processus virtuel de manipulateur, après que la bande virtuelle d'outil a été générée ;
- générer (S80) une instruction de commande pour un manipulateur sur la base de la commande virtuelle de manipulateur et du processus virtuel de manipulateur ;
- transmettre (S90) l'instruction de commande à une commande de manipulateur ; et
- ajuster (S90, S100) l'instruction de commande dans la commande de manipulateur et le processus virtuel de manipulateur en cas de variations de l'instruction de commande dans la commande de manipulateur ou du processeur virtuel de manipulateur,
la commande virtuelle de manipulateur étant mise à disposition dans une bibliothèque (6) et téléchargée de cette bibliothèque.

2. Procédé selon la revendication 1, **caractérisé en ce que** :
- pour générer la bande virtuelle d'outil, des caractéristiques de contour de l'élément virtuel sont détectées ;
- pour générer la bande virtuelle d'outil, les positions de la bande virtuelle d'outil entrées par un utilisateur sont détectées ;
- pour générer la bande virtuelle d'outil, les degrés de liberté et/ou les contraintes de l'outil virtuel sont pris en compte ; et/ou
- la bande virtuelle d'outil et/ou la bande virtuelle de manipulateur sont générées au moyen d'un générateur de bande.

3. Procédé selon l'une quelconque des revendications précédentes, **caractérisé par** l'étape consistant à :
- simuler la bande virtuelle d'outil et/ou la bande virtuelle de manipulateur (S80).

4. Procédé selon l'une quelconque des revendications précédentes, **caractérisé par** l'étape suivante consistant à :
- contrôler (S80) la bande virtuelle d'outil et/ou la bande virtuelle de manipulateur.

5. Procédé selon la revendication 4, **caractérisé en ce que** le contrôle de la bande virtuelle de manipulateur consiste à :
- contrôler les conditions cinématiques ;
- contrôler la présence d'une collision et/ou
- contrôler les conditions dynamiques.

6. Procédé selon l'une quelconque des revendications précédentes, **caractérisé en ce que** :
- la commande de manipulateur, à laquelle l'instruction de commande est transmise, peut être sélectionnée en tant que commande de manipulateur disponible à partir d'une pluralité de commandes de manipulateur.

7. Procédé selon l'une quelconque des revendications précédentes, **caractérisé par** les étapes consistant à :
- générer des positions virtuelles d'étalonnage du manipulateur ;
- générer des informations, en particulier des images des positions d'étalonnage ;
- transmettre les positions d'étalonnage à la commande de manipulateur ; et
- afficher les informations pendant un étalonnage du manipulateur.

8. Procédé selon l'une quelconque des revendications précédentes, **caractérisé en ce que** l'élément virtuel, l'outil virtuel et/ou la cinématique virtuelle du manipulateur sont mis à disposition dans une bibliothèque (6) et téléchargées de cette bibliothèque.

9. Procédé selon l'une quelconque des revendications précédentes, **caractérisé par** l'étape consistant à :
- mettre en mémoire la bande virtuelle d'outil, la bande virtuelle de manipulateur et/ou le processus virtuel de manipulateur.

10. Dispositif (60) servant à la génération assistée par ordinateur d'un processus de manipulateur comprenant :
- un système de positionnement servant à positionner (S20) un élément virtuel (2) par rapport à un système de référence ;
- un système de chargement d'outil servant à charger (S30) un outil virtuel (3) sélectionné ;
- un système de génération de bande d'outil servant à générer (S40) une bande virtuelle d'outil (4) ;
- un système de chargement de cinématique servant à charger (S50) une cinématique virtuelle de manipulateur (5) sélectionnée ; et
- un système de génération de bande de manipulateur servant à générer (S60) une bande virtuelle de manipulateur sur la base de la bande virtuelle d'outil et de la cinématique virtuelle de manipulateur, le dispositif étant conçu pour mettre en oeuvre un procédé selon l'une quelconque des revendications précédentes.

11. Programme informatique qui exécute un procédé selon l'une quelconque des revendications 1 à 9 lorsqu'il se déroule dans un dispositif selon la revendication 10.

12. Produit-programme informatique comprenant un code de programme qui est mis en mémoire sur un support lisible par une machine et qui comporte un programme informatique selon la revendication 11.
